(19)

Europäisches
Patentamt
European
Patent Office
Office européen
des brevets

(11) **EP 2 591 850 A1**

(12) **EUROPEAN PATENT APPLICATION**
published in accordance with Art. 153(4) EPC

(43) Date of publication:
**15.05.2013 Bulletin 2013/20**

(21) Application number: **11870168.9**

(22) Date of filing: **03.10.2011**

(51) Int Cl.:
**B01F 11/02** *(2006.01)*      **B01J 19/10** *(2006.01)*

(86) International application number:
**PCT/RU2011/000771**

(87) International publication number:
**WO 2013/032358 (07.03.2013 Gazette 2013/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2011 RU 2011135703**

(71) Applicants:
- **Getalov, Andrey Aleksandrovich
  Moscow 109548 (RU)**
- **Dedyukhin, Evgeny Evgen'evich
  Kazan 420043 (RU)**
- **Giniyatullin, Marat Munirovich
  Kazan 420043 (RU)**
- **Sirotkin, Aleksandr Semenovich
  Kazan 420097 (RU)**

(72) Inventors:
- **Getalov, Andrey Aleksandrovich
  Moscow 109548 (RU)**
- **Dedyukhin, Evgeny Evgen'evich
  Kazan 420043 (RU)**
- **Giniyatullin, Marat Munirovich
  Kazan 420043 (RU)**
- **Sirotkin, Aleksandr Semenovich
  Kazan 420097 (RU)**

(74) Representative: **Benatov, Emil Gabriel et al
Dr. Emil Benatov & Partners
Asen Peykov Str. No. 6
1113 Sofia (BG)**

(54) **METHOD FOR THE SIMULTANEOUS ULTRASONIC CAVITATION TREATMENT OF LIQUID
MEDIA OF DIFFERENT COMPOSITIONS**

(57)      The present invention refers to the field of cavitation treatment of liquid medium as well as the medium having the density of water or other liquid body is more than 65-70% of total mass.

Method of simultaneous ultrasonic cavitation treatment of liquid mediums having different compositions is what volumes of any kind are placed in the channel system with the liquid where the plain standing acoustic wave, passing the holding capacities, primary, in perpendicular position, is generated; the material of the holding capacities has the specific acoustic impedance equal to or similar to the specific acoustic impedance of the liquid filling the channel system and the impedance of the treated liquid medium; the amplitude of ultrasonic resonant vibrations exceeds the acoustic cavitation threshold for liquid mediums is being treated at the moment taking into account the transmission losses while passing the walls of holding capacity; the optimum temperature of liquid mediums treatment is given due to the liquid in the channel system, here the channel clearance **h** is taken divisible by quarter-wavelength, exited in the channel liquid:

$$h = (k/4)*(C/f), \quad k = 1, 2, 3, \ldots$$

where
**f-** frequencies of fundamental harmonic of standing wave of the channel wall, Hz;
**C -** acoustic velocity in the multiphase medium, mps;
**h -** channel clearance, m.

The method allows simultaneously conducting ultrasonic cavitation treatment of liquid mediums having contrasting compositions and at the same time to maintain the required temperature conditions.

Figure 1. Assembled representation of laboratory setup

**Description**

The present invention refers to the field of cavitation treatment f liquid medium as well as the medium having the density of water or other liquid body is more than 65-70% of total mass.

It is known that acoustic ultrasonic cavitation can be leveraged in different fields of economy implementing the following technological process /1-6/:

- Dispergating;
- Homogenization and emulsification;
- Intermixing;
- Disintegration;
- Deagglomeration.

As a matter of practice it covers process of producing of multicomponent medium (emulsions, suspensions, aqueous solutions and systems), ultrasonic sterilization (antisepsis) of water, milk, other liquid products etc.

Method of treatment of liquid medium, being implemented in the scheme of the ultrasonic reactor can be taken as prototype /1/. This method consists in that the ultrasonic wave in liquid volume is generated by means of the rod reactor, in the end face of which there is a wave source usually being piezoelectric sender.

There are a lot of variants of estimation of the form of rod radiator and the possibility of mounting of several piezoelectric senders in its end face, but they all are focused on brightening vibrations of the rod in the bottom end face and on the sideboards /8/.

This is due to the fact that the zone of super cavitation in practice is measured by size in few centimeters from the surface of vibration. For this reason the but end of the rod is considered the most effective zone since conjunctional wave in the treated liquid is being formed between the flat end face of the radiator and the flat bottom. With that it should be noted that it is very difficult to make the diameter of the end face equal to the size more than 50-70 mm.

The radiation from cylindrical surface of the rod has substantially smaller vibrational amplitude and cylindrical divergence. Factored in the acoustic waves reflected from external cylinder body walls it can be estimated that it is not practically possible to obtain the optimum condition of standing plane coherent ultrasonic wave in the treated liquid medium by analogy with the nonthreatening field between end face of the radiating unit and the bottom of the cylinder body.

Multiplex pattern of transmitted and reflected ultrasonic waves in the medium, the absence of wave coherence and energy concentration at a single frequency lead to the fact that it is not practically possible to obtain emulsions with the size of dispersion phase less than $\sim 1,0$ $\mu$m, the homogeneity gauge is not in excess of 20 % in the dominant mode. Thereat, the volume of the treated liquid is limited.

Another alternating method of ultrasonic cavitation treatment of liquid medium is put into practice in rotor-oscillatory

It is realized in rotor-pulsing homogenizers /2/.

By means of periodically generated alternating motion of the fluid from the rotary system stator-rotor, in insonation camera ultrasonic wave bearing cavitation effects originates. This is an interim option between acoustic and hydrodynamic cavitation. At the present moment such homogenizers gain the maximal currency. They are unsophisticated enough, take the opportunity to treat substantial volume of liquid much more cheaper than ultrasonic analogues. Satisfactory fast-speed homogenizers take the opportunity to obtain emulsions with the size of dispersion phase $\sim 1,5$ $\mu$m in the dominant mode, the homogeneity gauge is not in excess of 12-15 %. Nevertheless this method also has a number of essential restrictions due to poor coefficient of efficiency of electromechanical system (up to 10 %) that sets a limit to the power of ultrasonic wave to 1,5-2 W/cm$^2$, not taking the opportunity to work upon viscous medium and treatment of static liquid volume ( volume stator-rotor) as well as a quite a number of other significant limitations.

The nearest equivalent method is the method of obtaining of emulsion cosmetic preparation according to Application No. 2010137176 of September 08, 2010, the positive decision of ROSPATENT of March 22, 2011r, No. 2010137176/ 15(052870).

Brightening of vibrational amplitude of acoustic wave in the treated liquid medium is effected by resonance in-phase vibrations of each bigger side of channel system having rectangular cross-section and additional superposition of waves inside the channel, at that inside distance is equal to the small side of channel and is multiple of quarter of acoustic wave length in the treated medium. It takes the opportunity to centralize maximum energy on resonant vibrational frequency of the bigger side of the channel and obtain a standing acoustic wave of high intensity inside the channel.

The research carried out by the company " DERMANIKA" indicated that dominant mode of dispersivity in such process of treatment can be $\sim$ 500 nm and less, the emulsion does not practically include dispersion phase with the dimensions more than 1000 nm (1 micron), the proportion of emulsifier in the emulsion is twice or thrice less than usual. At that rotor-pulsing homogenizers take an opportunity to obtain emulsions with the dimensions of disperse phase beginning from 1000 nm (1 micron) and more with the more proportion of emulsifier /2/.

These research was fragmentary reported at the XIV International Research and Practice conference "Cosmetic preparations and raw materials:safety and efficiency" hold on in October 2009, where it was taken second place and the diploma, there are also publications in specialized magazines/6/.

In such a case the quality of products upgrades in accordance with cavitation criteria (cavitation threshold) [3, 4] and resonant mode of operation with the maximum efficiency and the best key figures on intensification of integrated physical-chemical, hydromechanical, heat-exchanging and mass-exchanging processes to the treated medium and the minimum size and homogeneity of oil phase (fat phase) recovered in the output.

This technology is implemented in commercial size in the acting cosmetic manufacturer "Closed Joint Stock Company Laboratory EMANSI". Initial products produced according to this technological process is the hand cream Anti Smell Smoke (for smokers, against influence of nicotine and smoke to hand skin) passed the total cycle of certification tests (Protocol of sanitary and healthcare inspection №77.01.12.915.П.006156.02.10 of February 03, 2010) and И statement of compliance confirmed by independent trails in laboratory "Spectrum" (accreditation certificate № ROSS RU.0001.21PSH50) with the corresponding test sheet No. 19 of December 22, 2009.

However this technology has a number of limitations on use, for example, if it is required to carry our simultaneous cavitation treatment of liquid mediums with contrasting composition by one channel or to proceed with batch treatment of minute steady-state (standing) volume of liquid mediums. It is not also possible to use one channel of standard dimensions in case it is required to obtain the final product in its output - in this case there is a lack of the linear length of the channel for aggregation of the required ultrasonication time and securing flow of the treated liquid.

There is such significant impediment as cavitation treatment of liquid medium with maintenance of the required temperature. It is known that while cavitation treatment there is high-heat deposition and active heating of the treated liquid and thus, the effective heat transfer becomes the serious problem. In a number of instances temperature conditions of treatment of the whole volume of liquid is of first importance.

The aim of invention is securing the possibility of simultaneous ultrasonic cavitation treatment of contrasting composition liquid mediums with the securing the required temperature conditions.

This aim is accomplished by the fact that the holding capacities with the treated liquid mediums having contrasting compositions are placed in the channel-system with the liquid where the standing acoustic wave, passing the holding capacities in perpendicular position, is generated. The material of the holding capacities has the specific acoustic impedance equal to or similar to the specific acoustic impedance of the liquid filling the channel system and the impedance of the treated liquid medium. The amplitude of ultrasonic resonant vibrations exceeds the acoustic cavitation threshold for liquid mediums is being treated at the moment taking into account the transmission losses while passing the walls of holding capacity. The optimum temperature of liquid mediums treatment is given due to the liquid in the channel system, here the channel clearance h is taken divisible by quarter-wavelength, exited in the channel liquid:

$$\mathbf{h} = (\mathrm{k}/4)^*(\mathbf{C}/\mathbf{f}),\ \mathrm{k}= 1,\ 2,\ 3,\ \dots$$

where

**f**- frequencies of fundamental harmonic of standing wave of the channel wall, hz;
**C** - acoustic velocity in the multiphase medium, mps;
**h** - channel clearance, m.

In the designated method the holding capacities with the treated liquids can be manufactured by different ways - they can be flowing channels (tubes) or fixed tanks (bathes).

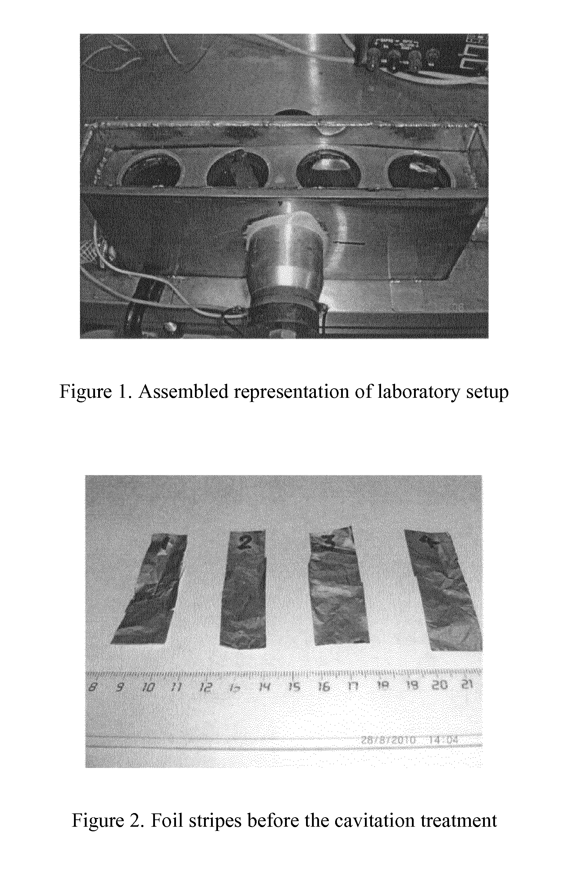

In Figure 1 it is represented one of the number of possible variants of implementation of the subject method. The channel can simultaneously treat up to 4 different compositions. There is the opportunity to secure liquid flow in the channel and maintain the required temperature in the holding capacities. The treated liquid volumes are placed in the ordinary polyethylene glasses having the volume of 100 ml. Acoustic impedance of polyethylene (solidness 0,92-0,94 g/cm$^3$, the velocity of dilatational wave about 1900-1950 m/s) differs from the impedance of water by about 16 % and for practical evaluation of possible loses while ultrasonic wave transmission there carried out classical test illustrating the effect of cavitation on the foil stripe.

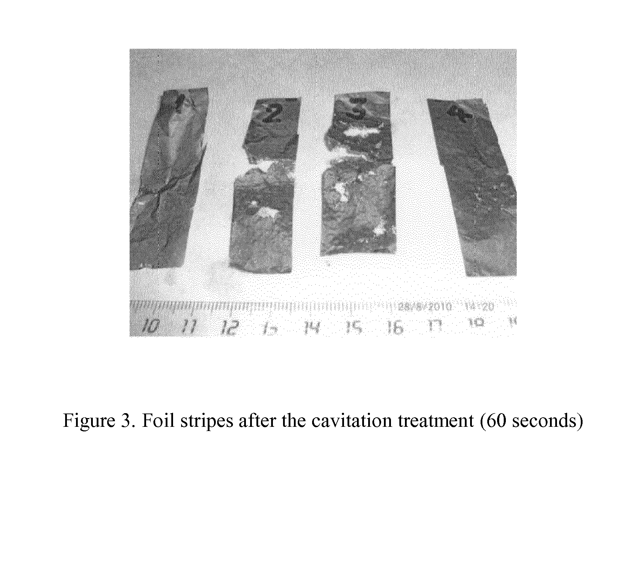

In Figure 2 and Figure 3 there are represented foil stripes have been placed in the plastic glasses before and after the cavitation effect accordingly. The ultrasonication time was 60 seconds only, the vibrational frequency of the channel walls was 24,65 kHz, the power delivered to the transmitters was about 90 W being about 40 % power of maximum possible long-lasting action power.

The width of the channel where the treated volumes of liquid were placed was 6 cm that is equal to the length of the acoustic wave in water for this frequency.

The channel walls were the membranes with dimensions of 30 by 13 cm.

It is known that for the rectangular membrane with the fixed edges the solution of wave propagation after the setting of natural vibration frequencies to a fixed Cartesian coordinate system is given by /9, 10/:

$$\omega = c\sqrt{k_x^2 + k_y^2} = c\sqrt{\left(j_x\frac{\pi}{L_x}\right)^2 + \left(j_y\frac{\pi}{L_y}\right)^2},$$

where $c$ - the velocity of the waves over the plate;

$k_x, k_y$ - wave numbers, the value of which is defined by boundary conditions;

$L_x$, - lateral plate length, axially directed $Ox$;

$L_y$ - lateral plate length, axially directed $Oy$;

$j_x, j_y$ - a whole number being equal to the number of antinodes lengthwise of the corresponding sides of the plate.

For obtaining peak recoil from the membrane it is required to implement the mode of vibration on the first mode, when the number of antinodes is equal to 1 in both coordinate directions. In this case all points of the membrane oscillate on the same frequency and phase with the maximum deflection in the center of the membrane.

For these dimensions of the channel walls the theoretical frequency is 24,4 kHz. In practice there are small departures from the calculated value, stipulated by the conditions of fixation on the verge, amount of deflection etc. /11/.

From Figure 3 it can be seen that in practice the using of thin polyethylene as the material for placement of the holding capacities with the treated liquid is inexpensive and effective solution and acoustic loss can be neglected.

In the conducted tests in the channel there were placed two spiroid polyethylene tubes wherethrough there were flashed two various liquids simultaneously being exposed to the effective cavitations treatment.

The important part of the tests was securing the required temperature conditions of the treated volumes of liquid. There were simultaneously prepared four volumes of various cosmetic creams in plastic glasses with the volume of each dose 80 ml. While homogenizing of fat and aqueous phase within ten minutes there was provided temperature about 70 °C due to the generated heat and the temperature of the water being in the channel. Further there was made water flushing and lowering of temperature to 43-45 °C and maintaining thereof at this level.

In addition, there were added active components and vitamin complex with homogenizing within further ten minutes.

At the last stage the temperature was lowered to 22-23 °C that allowed cooling of cosmetic emulsion and obtaining the final product. It took about 30 minutes to complete the whole cycle of preparing products.

The results of stability, acid content and stringiness tests indicated the confluence of the obtained products to the requirements of regulatory documents.

Thus, the subject method of ultrasonic cavitation treatment of liquid mediums revealed the possibility of simultaneous treatment of different mediums having contrasting compositions as in flowing as in steady-state variant proving the possibility of applying of any treatment schedule. At that the temperature of the treated liquid mediums in the educed volumes can be maintained at the given level due to using liquid in the channel as coolant. The required technology cycle can be provided by fluid flow control in the channel and the temperature of the liquid.

CITED LITERATURE

1. Bronin F.A. Analysis of cavitation fracture and dispergating of solids in high intensity ultrasonic field. Author's abstract thesis in Engineering Science, MISIS, 1967.

2. Chervyakov V.M., Odnolko V.G. Applying of hydrodynamic and cavitation effects in rotor apparatus.- M. : Izd-vo Mashinostroenye, 2008.

3. Sirityuk M.G. Experimental investigations of ultrasonic cavitation. In the book. Intense ultrasonic field, under the editorship of L.D. Rosenberg, 1968.

4. Krasylnikov V.A. Acoustic and ultrasonic waves in the air, water and solids-M. : Fizmatgiz, 1960.

5. Bergman L. Ultrasonics and its application in science and technique.-M. : Inostrannaya literatura, 1956.

6. V.I. Demenko, A.A. Getalov, T.V. Puchkova, E.A. Hotenkova. Effective method impoverishment of emulsifier while production of cosmetic emulsion, magazine "Raw materials and packaging" № 10(101), p.12.

7. Margulis M.A. Fundamental principles of sonochemistry. Chemical reactions in acoustic fields. - M.: Vyshaya Shkola, 1984.

8. Hmelev V.N., Popova O.V. Multifunctional ultrasonic apparatus and their implementation in small productions, agriculture and household conditions; scientific monograph, Alt. Gos. Tekh. Un-t im. I.I.Polzunov.-Barnaul: Izd-vo AltGTU.

9.Koshlyakov N.S., Gliner E.B., Smirnov M.M. Partial equations in mathematical physics. M., Izd-vo Vyshaya shkola, 1970.

10. Armanovich I.G., Levin V.I. Equations of mathematical physics. Second edition, M., Nauka, 1969.

11. Vibrations in technique. Manual in 6 parts, edited by Chalomey V.N., M., Mashinostroenie, 1979.

**Claims**

1. Method of simultaneous ultrasonic cavitation treatment of liquid mediums having contrasting compositions by placement the holding capacities within the flowing mechanical vibration system - channel where the option of resonant acoustic cavitation is being implemented characterized that the volumes of any kind are placed in the channel system with the liquid where the plain standing acoustic wave, passing the holding capacities, primary, in perpendicular position, is generated; the material of the holding capacities has the specific acoustic impedance equal to or similar to the specific acoustic impedance of the liquid filling the channel system and the impedance of the treated liquid medium; the amplitude of ultrasonic resonant vibrations exceeds the acoustic cavitation threshold for liquid mediums is being treated at the moment taking into account the transmission losses while passing the walls of holding capacity; the optimum temperature of liquid mediums treatment is given due to the liquid in the channel system, here the channel clearance **h** is taken divisible by quarter-wavelength, exited in the channel liquid:

$$\mathbf{h} = (k/4)*(\mathbf{C/f}), \; k = 1, 2, 3, \ldots$$

where

**f**- frequencies of fundamental harmonic of standing wave of the channel wall, Hz;
**C** - acoustic velocity in the multiphase medium, mps;
**h** - channel clearance, m.

Figure 1. Assembled representation of laboratory setup

Figure 2. Foil stripes before the cavitation treatment

Figure 3. Foil stripes after the cavitation treatment (60 seconds)

## INTERNATIONAL SEARCH REPORT

| | International application No. |
|---|---|
| | PCT/RU 2011/000771 |

**A. CLASSIFICATION OF SUBJECT MATTER**

B01F 11/02 (2006.01); B01J 19/10 (2006.01)

According to International Patent Classification (IPC) or to both national classification and IPC

**B. FIELDS SEARCHED**

Minimum documentation searched (classification system followed by classification symbols)

B01F 11/02, B01J 19/10

Documentation searched other than minimum documentation to the extent that such documents are included in the fields searched

Electronic data base consulted during the international search (name of data base and, where practicable, search terms used)

RUPAT, Esp@senet, PatSearch

**C. DOCUMENTS CONSIDERED TO BE RELEVANT**

| Category* | Citation of document, with indication, where appropriate, of the relevant passages | Relevant to claim No. |
|---|---|---|
| Y | JP 6207893 A (NIPPON SCIENCE KK) 26.07.1994, paragraphs [0004], [0010], [0012], [0014], [0019], fig. 2 | 1 |
| Y | RU 2427362 C1 (GETALOV ANDREI ALEKSANDROVICH) 27.08.2011, the claims | 1 |
| Y | CA 2025833 A1 (ZOCCHI MICHELE) 22.03.1991, the abstract, fig. 2 | 1 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 April 2012 (16.04.2012) | 26 April 2012 (26.04.2012) |

| Name and mailing address of the ISA/ | Authorized officer |
|---|---|
| RU | |
| Facsimile No. | Telephone No. |

Form PCT/ISA/210 (second sheet) (July 1998)

## REFERENCES CITED IN THE DESCRIPTION

### Patent documents cited in the description

- WO 2010137176 A
- WO 201013717615 A
- WO 052870 A

### Non-patent literature cited in the description

- XIV International Research and Practice conference. *Cosmetic preparations and raw materials:safety and efficiency,* October 2009
- *Protocol of sanitary and healthcare inspection №77.01.12.915.П.006156.02.10,* 03 February 2010
- **BRONIN F.A.** Analysis of cavitation fracture and dispergating of solids in high intensity ultrasonic field. *Author's abstract thesis in Engineering Science, MISIS,* 1967
- **CHERVYAKOV V.M. ; ODNOLKO V.G.** Applying of hydrodynamic and cavitation effects in rotor apparatus. *M. : Izd-vo Mashinostroenye,* 2008
- Experimental investigations of ultrasonic cavitation. **SIRITYUK M.G.** Intense ultrasonic field. 1968
- **KRASYLNIKOV V.A.** Acoustic and ultrasonic waves in the air, water and solids-M. *Fizmatgiz,* 1960
- **BERGMAN L.** Ultrasonics and its application in science and technique. *M. : Inostrannaya literatura,* 1956
- **V.I. DEMENKO ; A.A. GETALOV ; T.V. PUCHKOVA ; E.A. HOTENKOVA.** Effective method impoverishment of emulsifier while production of cosmetic emulsion, magazine. *Raw materials and packaging,* vol. 10 (101), 12
- **MARGULIS M.A.** Fundamental principles of sonochemistry. Chemical reactions in acoustic fields. *M.: Vyshaya Shkola,* 1984
- **HMELEV V.N. ; POPOVA O.V.** Multifunctional ultrasonic apparatus and their implementation in small productions, agriculture and household conditions; scientific monograph. *Alt. Gos. Tekh. Un-t im. I.I.Polzunov.-Barnaul: Izd-vo AltGTU*
- **KOSHLYAKOV N.S. ; GLINER E.B. ; SMIRNOV M.M.** Partial equations in mathematical physics. *M., Izd-vo Vyshaya shkola,* 1970
- **ARMANOVICH I.G. ; LEVIN V.I.** Equations of mathematical physics. M., Nauka, 1969
- Vibrations in technique. Manual in 6 parts. M., Mashinostroenie, 1979